# EUROPEAN PATENT APPLICATION

(11) **EP 2 025 535 A2**
(43) Date of publication of application: **18.02.2009**
(21) Application number: 07018774.5
(22) Date of filing: 25.09.2007
(51) Int. Cl.: B60C 23/00

(54) **Compressed air pumping tire and compressed air storing apparatus using the same**

(30) Priority: 13.08.2007 KR 20070081028
(71) Applicant: Jinairmotors Ltd, Yeoksam-Dong, Gangnam-Gu Seoul 135-080 (KR); Lee, Young-Su, Seoul 136-104 (KR)
(72) Inventor: Lee, Young Su, Seoul 136-104 (KR)
(74) Representative: Patentanwälte Westphal, Mussgnug & Partner

(57) **Abstract**

Disclosed therein are a compressed air pumping tire for pumping compressed air from the tire while the vehicle travels and a compressed air storing apparatus using the compressed air pumping tire. The compressed air pumping tire includes: at least one air compression chamber formed in a body of the tire and having a volume to be filled with a predetermined amount of air, the air compression chamber compressing air in such a way as to be contracted by a contact force between the road surface and the tire surface while the tire runs; at least one air intake hole adapted to fluidically communicate with an end of the air compression chamber for sucking the outside air into a contracted space of the air compression chamber to thereby make the contracted space of the air compression chamber restored; and at least one air discharge hole adapted to fluidically communicate with the other end of the air compression chamber for discharging the compressed air to the outside.

## Description

### BACKGROUND OF THE INVENTION

### Field of the Invention

The present invention relates to a tire for vehicles, and more particularly, to a compressed air pumping tire for pumping compressed air from the tire while the vehicle travels.

In addition, the present invention relates to a compressed air storing apparatus using the compressed air pumping tire, which stores compressed air generated from the tire, so that the vehicle utilizes the stored compressed air as energy necessary for driving the vehicle.

### Background Art

In general, a vehicle travels by obtaining necessary energy in such a way as to consume combustible gas fuel or liquid fuel or consume electric energy. So, the vehicle has to travel in a state where the vehicle contains a fuel or a battery therein.

In this instance, during traveling, tires are rotated while being in contact with the road surface. That is, the tires consume fuel while rolling in the state where they are always in contact with the road surface.

So, since each tire repeatedly rotates while the vehicle travels, if the tire outsteps an air bag in a state where the air bag is suspended on the tire, a condition for repeatedly performing an air pumping is satisfied.

In this manner, if compressed air pumped from the air bag is stored in the vehicle, it may be utilized, for example, as a driving energy of an engine.

Therefore, the above method for storing compressed air can drastically reduce a fuel consumption of the vehicle and greatly reduce environmental pollution.

### SUMMARY OF THE INVENTION

Accordingly, the present invention has been made in view of the above-mentioned problems occurring in the prior arts, and it is an object of the present invention to provide a compressed air pumping tire for vehicles, which can pump compressed air from the tire while the vehicle travels.

It is another object of the present invention to provide a compressed air storing apparatus using the compressed air pumping tire, which can store the compressed air generated from the pumping tire so that the stored compressed air can be utilized as a driving energy necessary for traveling the vehicle.

To accomplish the above objects, in an aspect of the present invention, there is provided a compressed air pumping tire comprising: at least one air compression chamber formed in a body of the tire and having a volume to be filled with a predetermined amount of air, the air compression chamber compressing air in such a way as to be contracted by a contact force between the road surface and the tire surface while the tire runs; at least one air intake hole (11) adapted to fluidically communicate with an end of the air compression chamber (13) for sucking the outside air into a contracted space of the air compression chamber(13) to thereby make the contracted space of the air compression chamber(13) restored; and at least one air discharge hole adapted to fluidically communicate with the other end of the air compression chamber for discharging the compressed air to the outside.

Preferably, the air compression chamber is formed inside the tire along the outer circumferential surface of the tire in such a way to be aligned in a round band shape.

In addition, the air compression chamber is formed in a generally rectangular shape, a round shape, or an elliptical shape in cross-section.

Moreover, one air compression chamber is or a number of the air compression chambers are helically wound on the tire in a width direction of the tire several times.

Additionally, the air compression chamber is partitioned into a plurality of parts by at least one compression chamber partition.

Furthermore, the air compression chamber includes ribs mounted at regular intervals to enhance a restoring force of the contracted and deformed air compression chamber.

In addition, the air compression chamber has a silicon coated layer formed on the inner surface thereof to prevent the surfaces of the air compression chamber from being stuck to each other.

To accomplish the above objects, in another aspect of the present invention, there is provided a compressed air pumping tire comprising: an air-compressing tube wound on the outer circumferential surface of the tire at least once; at least one air intake hole disposed at the front end of the air-compressing tube; and at least one air discharge hole disposed at the rear end of the air-compressing tube, wherein the air-compressing tube is made of flexible material, which can be elastically restored after the tire surface comes into contact with the road surface.

Here, the air-compressing tube is one or at least two in strip number and is wound several times on the outer circumferential surface of the tire.

In the meantime, the compressed air storing apparatus according to the present invention comprises: a compressed air tank connected to the air discharge hole of the tire to store air compressed in the air compression chamber; a check valve mounted on a flow channel for connecting the air discharge hole with the compressed air tank to prevent a backflow of the compressed air; a pressure control valve mounted at an outlet of the compressed air tank; a guide pipe connected to the air discharge hole to guide the compressed air toward a central axis of the tire wheel; and a rotating joint for connecting the guide pipe with the compressed air tank.

According to the present invention, the compressed air pumping tire and the compressed air storing apparatus using the compressed air pumping tire can easily pump the compressed air through the tire while the vehicle travels. The pumped compressed air is stored in a high-pressure state, and can be effectively utilized as energy to drive a necessary device. As an example, the compressed air can be used as injection energy for rotating a turbine connected to an engine to thereby greatly reduce fuel consumption of the engine.

### BRIEF DESCRIPTION OF THE DRAWINGS

The above and other objects, features and advantages of the present invention will be apparent from the following detailed description of the preferred embodiments of the invention in conjunction with the accompanying drawings, in which:

FIG. 1 is a front view and a partially enlarged sectional view of a compressed air pumping tire according to a first preferred embodiment of the present invention;

FIG. 2 is a side sectional view of the compressed air pumping tire and a circuit diagram of a compressed air storing apparatus according to the first preferred embodiment of the present invention;

FIG. 3 is a view for explaining a pumping principle of the compressed air pumping tire according to the first preferred embodiment;

FIG. 4 is a view showing a modification of the compressed air pumping tire according to the first preferred embodiment;

FIG. 5 is a view showing another modification of the compressed air pumping tire;

FIG. 6 is a conceptual view for showing a state where the compressed air pumping tire according to the first preferred embodiment is applied to a vehicle to obtain compressed air;

FIG. 7 is a front view and a partially enlarged sectional view of a compressed air pumping tire according to a second preferred embodiment of the present invention; and

FIG. 8 is a circuit diagram for showing a process to store the compressed air from the compressed air pumping tire according to the second preferred embodiment.

### DETAILED DESCRIPTION OF THE PREFERRED EMBODIMENT

Reference will be now made in detail to the preferred embodiment of the present invention with reference to the attached drawings.

<First Embodiment>

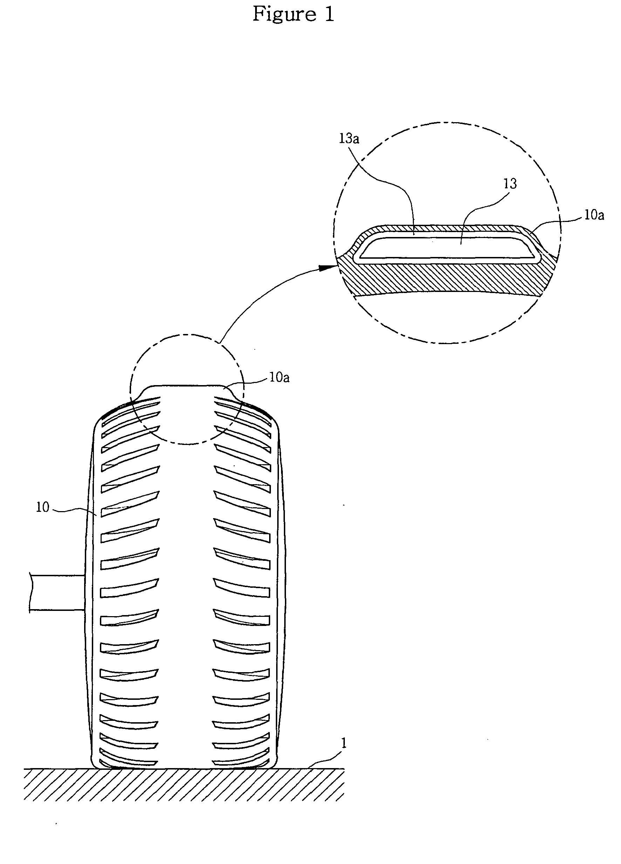

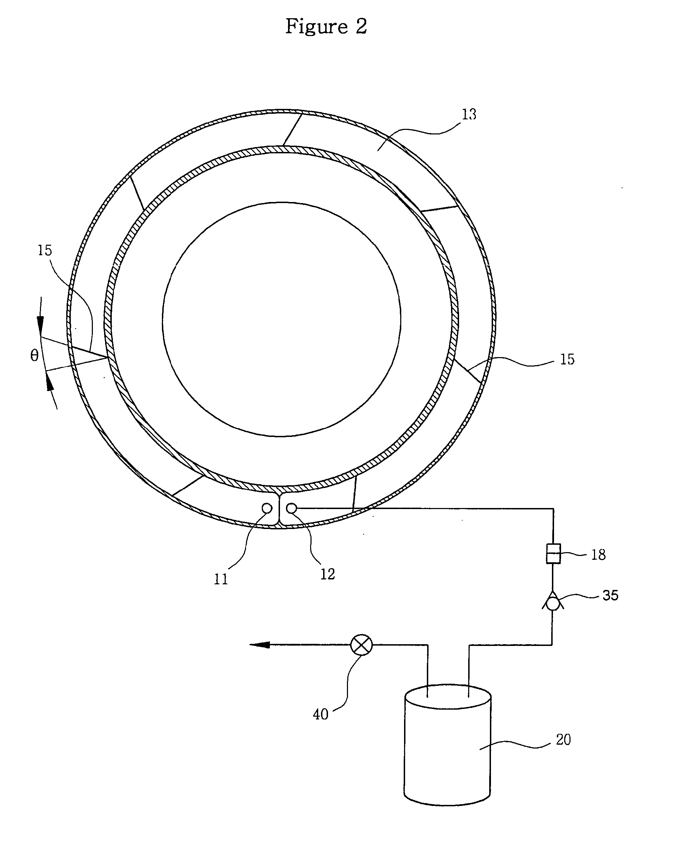

As shown in FIGS. 1 and 2, in the first preferred embodiment of the present invention, a compressed air pumping tire 10 includes at least one air compression chamber 13 formed therein along the outer circumferential surface of a tire body, and pumps compressed air from the air compression chamber 13. That is, in the first preferred embodiment, the air compression chamber 13 is formed integrally with the tire body.

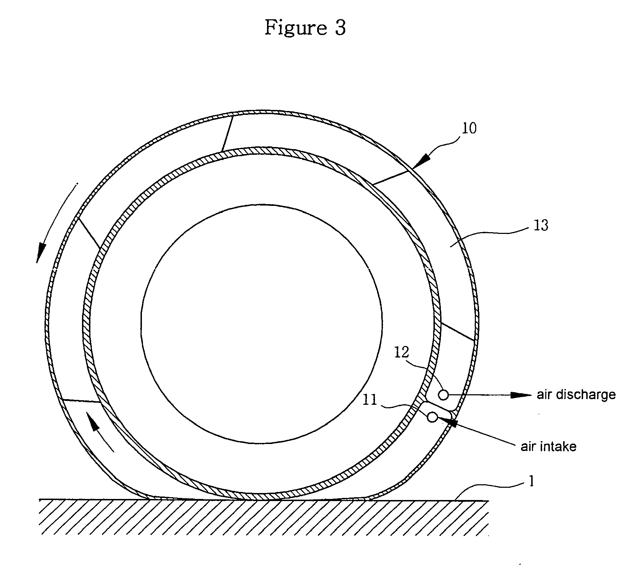

In this instance, the air compression chamber 13 includes at least one air intake hole 11 and at least one air discharge hole 12. So, as shown in FIG. 3, while the tire 10 rolls on the road surface, a part of the tire, whose surface comes into contact with the road surface 1, is contracted and pushes the compressed air toward the air discharge hole 12. That is, the tire pumps air toward the air discharge hole 12 while compressing the air compression chamber 13 in the opposite direction to a rotational direction of the tire 10. In this instance, a part of the tire, which passed compression, is expanded and restored by an elastically restoring force of the tire body.

As shown in FIG. 1, if the air compression chamber 13 is formed in a generally rectangular shape in cross-section or an elliptical form having a prolate axis in a width direction of the tire, the air compression chamber 13 may be one. In this instance, as shown in FIG. 2, the air compression chamber 13 is formed in a round band type. Here, as shown in FIG. 1, it is preferable that the air compression chamber 13 having the rectangular section includes a silicon-coated layer 13a formed on the inner surface thereof to prevent that the surfaces of the air compression chamber 13 are not stuck to each other when the air compression chamber 13 is restored after the contraction.

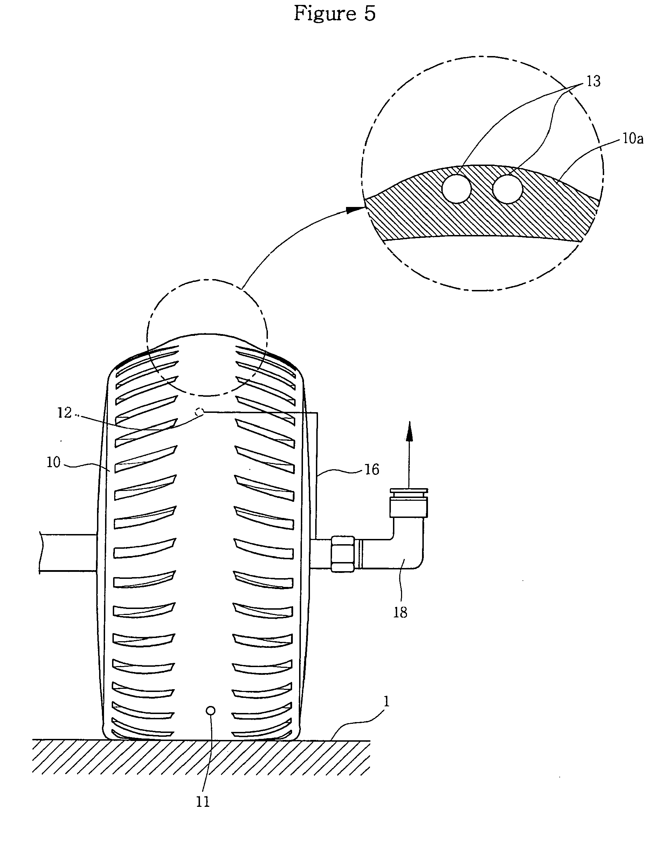

In addition, as shown in FIG. 5, the air compression chamber 13 may be adopted in such a way as to have a round section and to be helically wound on the circumference of the tire body at least once. The number of times that the air compression chamber 13 is wound on the tire body can be increased or decreased according to the width of the tire 10.

For instance, if the air compression chamber 13 is helically wound on the circumference of the tire 10 twice, the air intake hole 11 is provided at the front end of the air compression chamber 13 and the air discharge hole 12 is provided at the rear end of the air compression chamber 13. So, whenever the tire rotates twice, the volume of air in the air compression chamber 13 is reduced toward the air discharge hole 12 due to a pressure contact with the road surface to thereby generate compressed air.

In the first preferred embodiment, it is preferable that the air compression chamber 13 is formed inside a round projection portion 10a protrudingly formed along the outer circumferential surface of the tire body. Moreover, it would be appreciated that a number of the air compression chambers 13 are formed in such a way as to be helically wound on the tire body in the width direction of the tire several times.

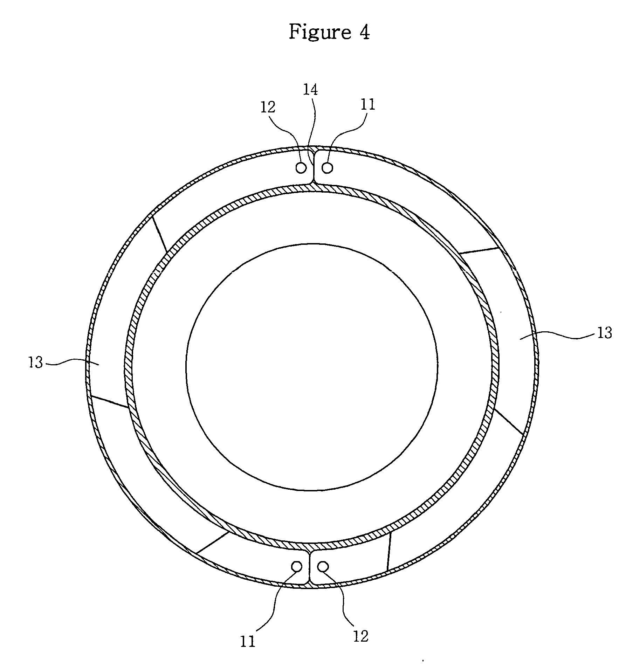

Meanwhile, as shown in FIG. 4, the air compression chamber 13 may be partitioned into a plurality of parts by at least one compression chamber partition 14. As an example, FIG. 4 illustrates a state where the air compression chamber 13 is partitioned into two parts by the partition 14, and the partitioned compression chambers 13 and 13 respectively have air intake holes 11 and 11 and air discharge holes 12 and 12.

Furthermore, the air compression chamber 13 may further include ribs 15 mounted therein at regular intervals to enhance the restoring force of the contracted and deformed air compression chamber 13. In this instance, as shown in FIG. 2, it is preferable that the ribs 15 are mounted in a state where they are inclined at a fixed angle (θ) in a radial direction so as not to interrupt running of the tire 10.

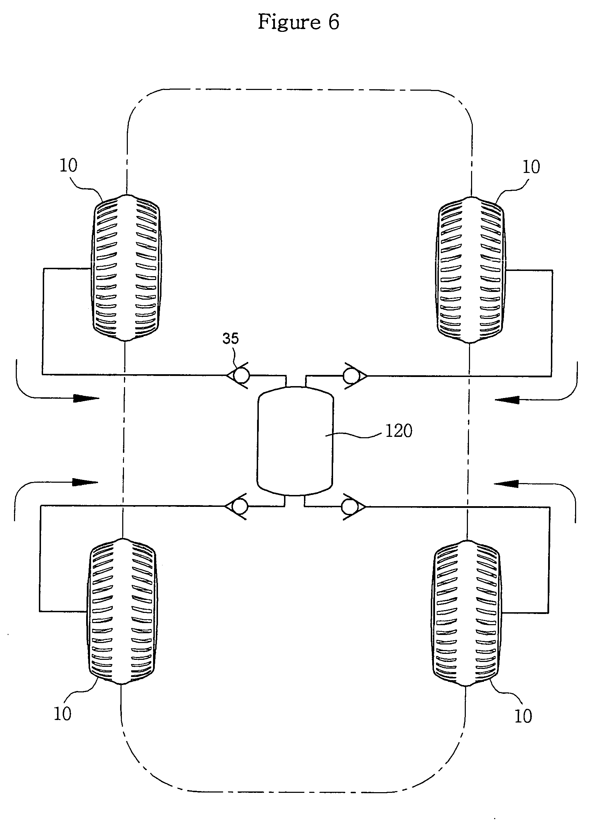

A compressed air storing apparatus using the compressed air pumping tire 10 having the above configuration can be configured as follows. As shown in FIGS. 2 and 6, a compressed air tank 20 for storing the air compressed in the air compression chamber 13 is connected to the air discharge hole 12 of the tire 10, and a check valve 35 for preventing a backflow of the compressed air is mounted on a flow channel for connecting the air discharge hole 12 with the compressed air tank 20. So, the compressed air stored in the compressed air tank 20 is shut out by the check valve 35, whereby it is prevented that the compressed air is introduced into the air compression chamber again.

In the meantime, a pressure control valve 40 is mounted at an outlet of the compressed air tank 20 to keep the inside pressure of the compressed air tank 20 at a fixed setting pressure.

As shown in FIG. 5, a guide pipe 16 is connected to the air discharge hole 12 of the air compression chamber 13 to guide the compressed air, which is pumped from the air compression chamber 13, toward a central axis of a wheel of the tire 10, and a rotating joint 18 is connected to the guide pipe 16. So, even though the tire rotates on the road surface while the vehicle travels, the compressed air can be smoothly compressed to the tank 20 without any influence of the pipe.

In case where the compressed air storing apparatus is applied to four-wheel vehicle, the compressed air storing apparatuses are selectively installed on two front wheel tires and/or two rear wheel tires, or on all four wheel tires as shown in FIG. 6.

Therefore, when the tire 10 is in contact with the road surface by weight of the vehicle as shown in FIGS. 3 and 5, a contact face is formed on a portion of the air compression chamber 13 in such a way that the portion of the air compression chamber 13 is contracted in a state where it is in contact with the road surface 1. The location of the contracted contact face is continuously changed in the air compression chamber 13 due to the rotation of the tire 10 while the vehicle travels.

So, as shown in FIG. 3, while the contact face formed by the contact between the tire 10 and the road surface moves from the air intake hole 11 toward the air discharge hole 12, the capacity of the air compression chamber 13 is gradually reduced to thereby compress the air inside the air compression chamber 13. The air compressed in the air compression chamber 13 is stored into the compressed air tank 20 through the air discharge hole 12. In this instance, the check valve 35 prevents the backflow of the compressed air stored into the compressed air tank 20. The compressed air stored in the compressed air tank 20 can be utilized to drive a necessary device, for example, a turbine connected to an engine.

Meanwhile, when the compressed air tank 20 is filled with the compressed air more than a set pressure, the pressure control valve 40 is opened so that the pressure lowers to the set pressure.

<Second Embodiment>

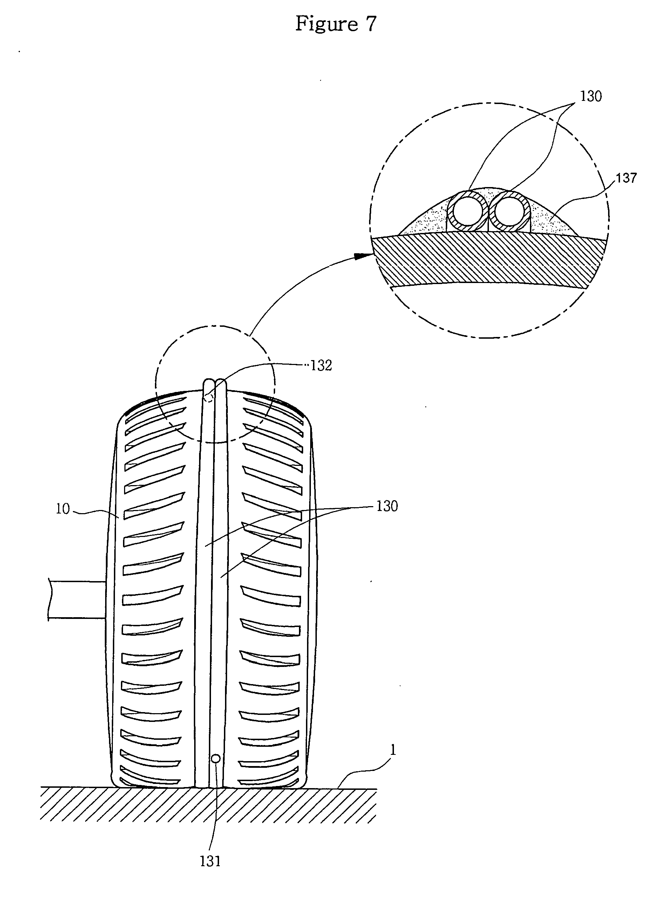

As shown in FIG. 7, a compressed air pumping tire according to the second preferred embodiment of the present invention includes at least one air-compressing tube 130 of at least one strip. The air-compressing tube 130 includes an air intake hole 131 and an air discharge hole 132 formed on the outer circumferential surface of the tire 10, and is made of flexible material, which is restorable after the compression. In this instance, the number of the strips of the air-compressing tube 130 can be increased or decreased in consideration of the width of the tire 10.

The air-compressing tube 130 of one strip or two strips can be wound on the outer circumferential surface of the tire 10 several times. The air-compressing tube 130 may have a section of a round form or another form. That is, in the second preferred embodiment of the present invention, it would be appreciated that the air-compressing tube 130 can be understood as an idea substituting for the air compression chamber 13 of the first preferred embodiment. In this instance, the air-compressing tube 130 is bonded on the tire body by a bonding means 137.

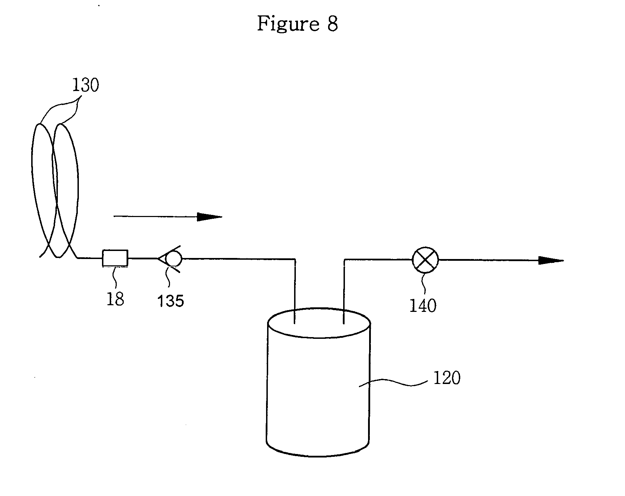

Also, in the compressed air pumping tire according to the second preferred embodiment having the above configuration, as shown in FIG. 8, a compressed air tank 120 is connected to the air discharge hole 132. A check valve 135 for preventing the backflow of the compressed air is mounted on a flow channel for connecting the air discharge hole 132 with the compressed air tank 120. A pressure control valve 140 is mounted at an outlet of the compressed air tank 120 to store the compressed air in a high-pressure state.

Also, in the second preferred embodiment, the compressed air storing apparatus can be installed on all four wheels of the vehicle or selectively installed on the front wheels or the rear wheels. In this instance, since a structure of pipe line for connecting the air-compressing tube 130 and the tank 120 with each other is the same as the first preferred embodiment, its detailed description will be omitted.

As described above, the present invention can simply pump the compressed air through the tire while the vehicle travels. In addition, the present invention can store the compressed air in the high-pressure state, whereby the stored compressed air can be effective utilized as energy for driving a necessary device.

As an example, the compressed air is used as energy for rotating the turbine connected to the engine or energy for a turbo charger to thereby greatly reduce a fuel consumption of the engine.

While the present invention has been described with reference to the particular illustrative embodiments, it is not to be restricted by the embodiments but only by the appended claims. It is to be appreciated that those skilled in the art can change or modify the embodiments without departing from the scope and spirit of the present invention.

## Claims

1. A compressed air pumping tire for vehicles, comprising:
at least one air compression chamber (13) formed in a body of the tire (10) and having a volume to be filled with a predetermined amount of air, the air compression chamber (13) compressing air in such a way as to be contracted by a contact force between the road surface and the tire surface while the tire runs;
at least one air intake hole (11) adapted to fluidically communicate with an end of the air compression chamber (13) for sucking the outside air into a contracted space of the air compression chamber(13) to thereby make the contracted space of the air compression chamber(13) restored; and
at least one air discharge hole (12) adapted to fluidically communicate with the other end of the air compression chamber (13) for discharging the compressed air to the outside.

2. The compressed air pumping tire according to claim 1, wherein the air compression chamber (13) is formed inside the tire along the outer circumferential surface of the tire in such a way to be aligned in a round band shape.

3. The compressed air pumping tire according to claim 1, wherein the air compression chamber (13) is formed in a rectangular shape in cross-section.

4. The compressed air pumping tire according to claim 1, wherein the air compression chamber (13) is formed in a round shape in cross-section.

5. The compressed air pumping tire according to claim 1, wherein the air compression chamber (13) has a section of an elliptical form.

6. The compressed air pumping tire according to claim 1, wherein the air compression chamber (13) is single in number and is formed in a helical shape wound on the tire several times in a width direction of the tire.

7. The compressed air pumping tire according to claim 1, wherein the air compression chambers (13) are plural in number and are formed in helical shape wound on the tire several times in a width direction of the tire.

8. The compressed air pumping tire according to claim 1, wherein the air compression chamber (13) is partitioned into a plurality of parts by at least one compression chamber partition (14).

9. The compressed air pumping tire according to claim 1, wherein the air compression chamber (13) includes ribs (15) mounted at regular intervals to enhance a restoring force of the contracted and deformed air compression chamber (13).

10. The compressed air pumping tire according to claim 1, wherein the air compression chamber (13) has a silicon coated layer (13a) formed on the inner surface thereof to prevent the surfaces of the air compression chamber (13) from being stuck to each other.

11. The compressed air pumping tire according to claim 1, wherein the air compression chamber (13) is formed inside a round projection portion (10a) protrudingly formed along the outer circumferential surface of the tire body.

12. A compressed air pumping tire for vehicles, comprising:
an air-compressing tube (130) wound on the outer circumferential surface of the tire (10) at least once;
at least one air intake hole (131) disposed at the front end of the air-compressing tube (130); and
at least one air discharge hole (132) disposed at the rear end of the air-compressing tube (130),
wherein the air-compressing tube (130) is made of flexible material, which can be elastically restored after the tire surface comes into contact with the road surface.

13. The compressed air pumping tire according to claim 12, wherein the air-compressing tube (130) is one in strip number and is wound several times on the outer circumferential surface of the tire.

14. The compressed air pumping tire according to claim 12, wherein the air-compressing tube (130) is at least two in strip number and is wound several times on the outer circumferential surface of the tire.

15. The compressed air pumping tire according to claim 12, wherein the air-compressing tube (130) is formed in a round shape in cross-section.

16. A compressed air storing apparatus using a compressed air pumping tire comprising:
tires selected from any one of claims 1 to 11, the tires being mounted on the front wheels and/or the rear wheels of a vehicle;
a compressed air tank (20) connected to an air discharge hole (12) of the tire to store air compressed in an air compression chamber (13);
a check valve (35) mounted on a flow channel for connecting the air discharge hole (12) with the compressed air tank (20) to prevent a backflow of the compressed air;
a pressure control valve (40) mounted at an outlet of the compressed air tank (20);
a guide pipe (16) connected to the air discharge hole (12) to guide the compressed air toward a central axis of the tire wheel; and
a rotating joint (18) for connecting the guide pipe (16) with the compressed air tank (20).

17. A compressed air storing apparatus using a compressed air pumping tire comprising:
tires selected from any one of claims 12 to 15, the tires being mounted on the front wheels and/or the rear wheels of a vehicle;
a compressed air tank (120) connected to an air discharge hole (132) of the tire to store air compressed in an air-compressing tube (130);
a check valve (135) mounted on a flow channel for connecting the air discharge hole (132) with the compressed air tank (120) to prevent a backflow of the compressed air;
a pressure control valve (140) mounted at an outlet of the compressed air tank (120);
a guide pipe (16) connected to the air discharge hole (132) to guide the compressed air toward a central axis of the tire wheel; and
a rotating joint (18) for connecting the guide pipe (16) with the compressed air tank (120).
